# EUROPÄISCHE PATENTANMELDUNG

(11) **EP 1 760 084 A1**
(43) Veröffentlichungstag der Anmeldung: **07.03.2007**
(21) Anmeldenummer: 05108070.3
(22) Anmeldetag: 02.09.2005
(51) Int. Cl.: C07F 7/18

(54) **Tensid-stabilisierte Organoalkoxysilanzusammensetzung**

(71) Anmelder: Sika Technology AG, 6340 Baar (CH)
(72) Erfinder: Sutter, Jolanda, 4310, Rheinfelden (CH); Huck, Wolf-Rüdiger, 8044, Zürich (CH)
(74) Vertreter: Isler, Jörg

(57) **Zusammenfassung**

Die vorliegende Erfindung betrifft Organoalkoxysilanzusammensetzungen, welche mindestens ein Organoalkoxysilan **S,** sowie mindestens ein wasserfreies Tensid **T** enthalten, wobei der Gewichtsanteil aller Organoalkoxysilane **S** ≥ 33 Gew.-%, bezogen auf das Gewicht der Organoalkoxysilanzusammensetzung beträgt und wobei das Verhältnis der Gewichtsumme aller Organoalkoxysilane **S** zur der Gewichtsumme aller wasserfreien Tensiden **T (S:T)** einen Wert von 5:1 bis 1:2 aufweist.

## Beschreibung

### Technisches Gebiet

Die Erfindung betrifft das Gebiet der Organoalkoxysilane.

### Stand der Technik

Organoalkoxysilan sind bekannte Substanzen und werden seit langem beispielsweise als Haftvermittler eingesetzt. Sie werden vom Fachmann auch häufig als Silane bezeichnet. Sie weisen Alkoxysilangruppen auf, welche im Kontakt mit Wasser in flüssiger Form oder als Luftfeuchtigkeit unter Bildung einer Silanol-Gruppe (Si-OH) hydrolysieren und dann zu Siloxanverbindungen vernetzen können. Dies kann dazuführen, dass bereits nach kürzester Zeit Ausfällungen oder Trübungen auftauchen. Diese Empfindlichkeit ist insbesondere bei polaren Organoalkoxysilanen, sowie bei basischen pH, und deshalb insbesondere bei Aminosilanen sehr ausgeprägt.

Deshalb ist im Umgang mit Organoalkoxysilanen darauf zu achten, dass sie unter Ausschluss von Feuchtigkeit gelagert und verarbeitet werden. Dies führt in der Praxis deshalb vielfach zu Schwierigkeiten, beispielsweise wenn eine Verpackung nicht dicht ist oder geöffnet und schlecht verschlossen wurde.

### Darstellung der Erfindung

Aufgabe der vorliegenden Erfindung ist es daher, die die Lagerstabilität von Organoalkoxysilanen zu verbessern und insbesondere die Empfindlichkeit der Organoalkoxysilane gegenüber Wasser, insbesondere gegenüber Luftfeuchtigkeit, zu verbessern.

Überraschenderweise wurde gefunden, dass die Organoalkoxysilanzusammensetzung gemäss Anspruch 1 diese Aufgabe lösen können.

### Wege zur Ausführung der Erfindung

Die vorliegende Erfindung betrifft Organoalkoxysilanzusammensetzungen, welche mindestens ein Organoalkoxysilan **S**, sowie mindestens ein wasserfreies Tensid **T** enthalten, wobei der Gewichtsanteil aller Organoalkoxysilane **S** ≥ 33 Gew.-%, bezogen auf das Gewicht der Organoalkoxysilanzusammensetzung beträgt und wobei das Verhältnis der Gewichtsumme aller Organoalkoxysilane **S** zur der Gewichtsumme aller wasserfreien Tensiden **T** (**S:T**) einen Wert von 5:1 bis 1:2 aufweist.

Mit dem Begriff "Organoalkoxysilan" oder kurz "Silan" werden im vorliegenden Dokument Verbindungen bezeichnet, in denen zum einen mindestens eine, üblicherweise zwei oder drei Alkoxygruppen direkt an das Silicium-Atom gebunden sind (über eine Si-O-Bindung), und die zum anderen mindestens einen direkt an das Silicium-Atom (über eine Si-C-Bindung) gebundenen organischen Rest aufweisen und keine Si-O-Si-Bindungen aufweisen. Entsprechend dazu bezeichnet der Begriff "Silangruppe" die an den organischen Rest des Organoalkoxysilans gebundene Silicium-haltige Gruppe. Die Organoalkoxysilane, beziehungsweise deren Silangruppen, haben die Eigenschaft, bei Kontakt mit Feuchtigkeit zu hydrolysieren. Dabei bilden sich Organosilanole, das heisst Silicium-organische Verbindungen enthaltend eine oder mehrere Silanolgruppen (Si-OH-Gruppen) und, durch nachfolgende Kondensationsreaktionen, Organosiloxane, das heisst Silicium-organische Verbindungen enthaltend eine oder mehrere Siloxangruppen (Si-O-Si-Gruppen).

Mit Begriffen wie "Aminosilan", "Epoxysilan", "Alkylsilan" und "Mercaptosilan" werden Silane bezeichnet, welche die entsprechende funktionelle Gruppe aufweisen, hier also ein Aminoalkylalkoxysilan, Epoxyalkylalkoxysilan, Alkylalkoxysilan und Mercaptoalkylalkoxysilan.

Der Term "wasserfrei" ist im vorliegenden Dokument nicht als "absolut frei von Wasser" auszulegen. Es werden deshalb auch Verbindungen und Zusammensetzungen als "wasserfrei" bezeichnet, welche geringe Spuren von Wasser enthalten, d.h. welche einen Restwassergehalt von maximal 1 Gew.-%, insbesondere von maximal 0.5 Gew.-% enthalten.

Organoalkoxysilane **S** sind insbesondere Aminosilane, Epoxysilane, Mercaptosilane und Alkylsilane.

Als Aminosilane sind insbesondere Aminosilane der Formel (I) oder die Reaktionsprodukte der Formel (I), welche mindestens eine sekundäre oder primäre Aminogruppe aufweist, mit einer Verbindung (**ARV**), welche mindestens eine funktionellen Gruppe, welche mit einer primären oder sekundären Aminogruppe reagieren kann, enthält.

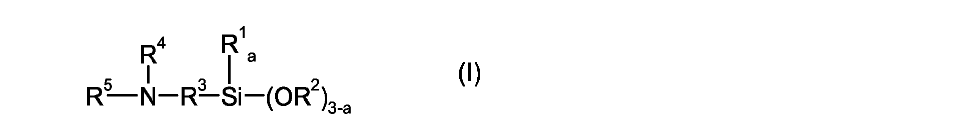

Hierbei steht R¹ für eine Alkylgruppe mit 1 bis 8 C-Atomen, bevorzugt für eine Methyl- oder für eine Ethylgruppe. R¹ steht vorzugsweise für eine Methylgruppe.

Weiterhin steht R² für eine Alkylgruppe mit 1 bis 5 C-Atomen, bevorzugt für eine Methylgruppe oder für eine Ethylgruppe oder für eine Isopropylgruppe. R² steht vorzugsweise für eine Methylgruppe oder für eine Ethylgruppe.

Weiterhin steht R³ für eine lineare oder verzweigte Alkylengruppe mit 1 bis 4 C-Atomen. R³ steht vorzugsweise für eine Propylengruppe.

Weiterhin steht R⁴ für H oder eine lineare oder verzweigte Alkylengruppe mit 1 bis 10 C-Atomen oder für einen Substituent der Formel (II)

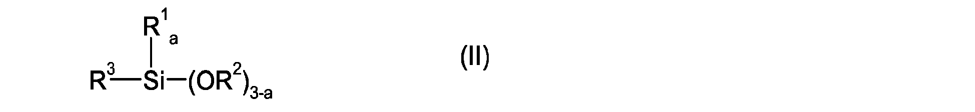

Weiterhin steht R⁵ für H oder eine lineare oder verzweigte Alkylengruppe mit 1 bis 10 C-Atomen oder für eine lineare oder verzweigte Alkylengruppe mit 1 bis 10 C-Atomen mit weiteren Heteroatomen oder für einen Substituent der Formel (II)

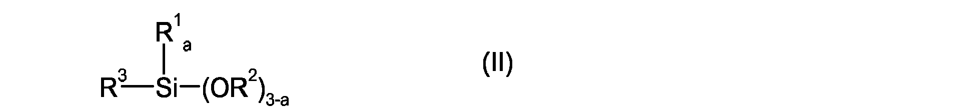

Als besonders vorteilhaften Rest einer linearen Alkylengruppe mit 1 bis 10 C-Atomen mit weiteren Heteroatomen R⁵ gilt der Rest CH₂CH₂NH₂.

Schliesslich steht der Index a für einen Wert 0, 1 oder 2, insbesondere für 0 oder 1. Bevorzugt steht a für 0.

Beispiele für derartige Aminosilane der Formel (I) sind 3-Aminopropyl-trimethoxysilan, 3-Aminopropyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, N-Methyl-3-Aminopropyl-trimethoxysilan, N-Ethyl-3-Aminopropyl-trimethoxysilan, N-Butyl-3-Aminopropyl-trimethoxysilan, N-Cyclohexyl-3-Aminopropyl-trimethoxysilan, N-Phenyl-3-Aminopropyl-trimethoxysilan, N-Methyl-3-Amino-2-methylpropyl-trimethoxysilan, N-Ethyl-3-Amino-2-methylpropyl-trimethoxysilan, N-Ethyl-3-Aminopropyl-dimethoxy-methylsilan, N-Phenyl-4-Aminobutyl-trimethoxysilan, N-Phenyl-aminomethyl-dimethoxymethylsilan, N-Cyclohexyl-aminomethyl-dimethoxymethylsilan, N-Methyl-aminomethyl-dimethoxymethylsilan, N-Ethyl-aminomethyl-dimethoxymethylsilan, N-Propyl-aminomethyl-dimethoxymethylsilan, N-Butyl-aminomethyl-dimethoxymethylsilan; N-(2-Aminoethyl)-3-aminopropyl-trimethoxysilan, Bis(trimethoxysilylpropyl)amin, Tris(trimethoxysilylpropyl)amin sowie deren Analoga mit Ethoxy- oder Isopropoxygruppen anstelle der Methoxygruppen am Silicium.

Bevorzugte Aminosilane der Formel (I) sind Aminosilane, welche ausgewählt sind aus der Gruppe umfassend Aminosilane der Formel (III), (IV) und (V).

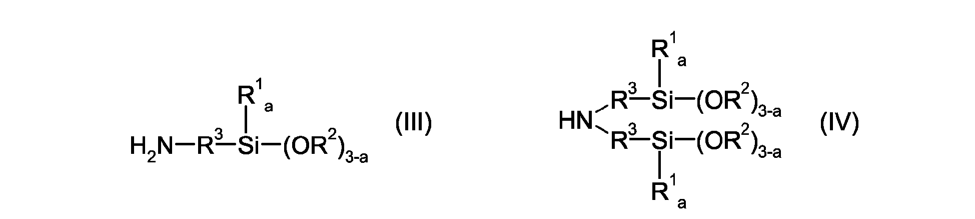

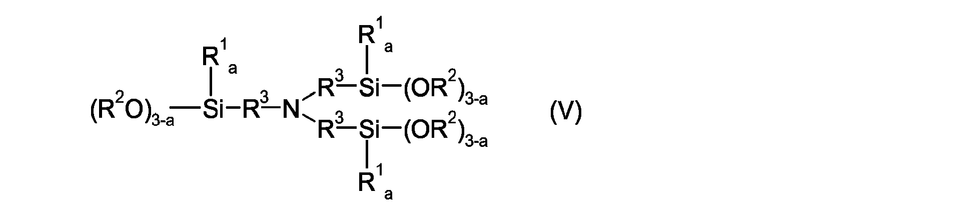

Die meist bevorzugten Aminosilane der Formel (I) sind die Aminosilane 3-Aminopropyl-trimethoxysilan, N-(2-Aminoethyl)-3-aminopropyl-trimethoxysilan, 3-[2-(2-Aminoethylamino)-ethylamino]-propyl-trimethoxysilan, Bis(trimethoxysilylpropyl)amin und Tris(trimethoxysilylpropyl)amin.

In einer Ausführungsform ist das Aminosilan ein Reaktionsprodukt eines Aminosilans der Formel(I), wie es oben beschrieben worden ist, und welches mindestens eine sekundäre oder primäre Aminogruppe aufweist, mit einer Verbindung (**ARV**), welche mindestens eine funktionellen Gruppe, welche mit einer primären oder sekundären Aminogruppe reagieren kann.

Diese funktionelle Gruppe, welche mit einer primären oder sekundären Aminogruppe reagieren kann, ist bevorzugt eine Epoxygruppe. Es sind aber auch andere Gruppen, wie beispielsweise Isocyanat-Gruppen oder aktivierte Doppelbindungen, denkbar. Insbesondere geeignete Verbindungen mit Epoxygruppen sind Epoxysilane. Als bevorzugte Verbindungen (**ARV**), welche mit dem Aminosilan der Formel (I) mit mindestens einer sekundären oder primären Aminogruppe reagieren kann sind Epoxysilane der Formel (VI)

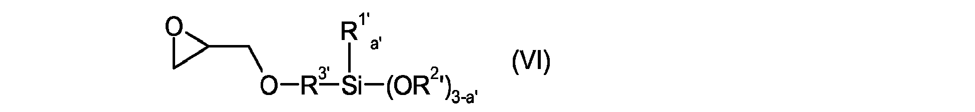

R^{1'} steht hierbei für eine Alkylgruppe mit 1 bis 8 C-Atomen, bevorzugt für eine Methyl- oder für eine Ethylgruppe. steht. R^{2'} steht für eine Alkylgruppe mit 1 bis 5 C-Atomen. Weiterhin steht R^{3'} für eine lineare oder verzweigte Alkylengruppe mit 1 bis 4 C-Atomen und a' für 0, 1 oder 2, insbesondere für 0 oder 1.

R^{1'} steht insbesondere für eine Methylgruppe. R^{2'} steht bevorzugt für eine Methylgruppe oder für eine Ethylgruppe oder für eine Isopropylgruppe. Als besonders bevorzugt steht R^{2'} für eine Methylgruppe oder für eine Ethylgruppe. R^{3'} steht bevorzugt für Propylen. Der Index a' steht bevorzugt für 0.

Als Epoxysilane sind beispielsweise 2-(3,4-Epoxycyclohexyl)-ethyl-trimethoxysilan, 2-(3,4-Epoxycyclohexyl)-ethyl-triethoxysilan, 3-Glycidyloxypropyl-triethoxysilan und 3-Glycidyloxypropyl-trimethoxysilan.

Als bevorzugte Epoxysilane gelten 3-Glycidyloxypropyl-triethoxysilan und 3-Glycidyloxypropyl-trimethoxysilan. Das meist bevorzugte Epoxysilane ist 3-Glycidyloxypropyl-trimethoxysilan.

Das Aminosilan der Formel(I), welches für das Reaktionsprodukt eingesetzt wird, sind neben N-(2-Aminoethyl)-3-aminopropyl-trimethoxysilan und N-(2-Aminoethyl)-3-aminopropyl-triethoxysilan, bevorzugt N-(2-Aminoethyl)-3-aminopropyl-trimethoxysilan, insbesondere Aminosilane der Formel (III) oder (IV), insbesondere 3-Aminopropyl-trimethoxysilan, Bis(trimethoxysilylpropyl)-amin, 3-Aminopropyl-triethoxysilan und Bis(triethoxysilylpropyl)amin. Bevorzugt sind 3-Aminopropyl-trimethoxysilan und Bis(trimethoxysilylpropyl)amin.

Je nach Stöchiometrie des Aminosilans der Formel (I) und der aminreaktiven Verbindung (**ARV**) kann das Reaktionsprodukt noch primäre oder sekundäre Aminogruppen aufweisen oder nicht.

Beispiele für derartige Rektionsprodukte sind Verbindungen der Formel (VII), (VIII), (IX), (X), (XI) und (XII).

Die Verbindungen der Formeln (VII), (VIII) und (IX) werden aus der Reaktion von N-(2-Aminoethyl)-3-aminopropyl-trimethoxysilan und 3-Glycidyloxypropyl-trimethoxysilan erhalten.

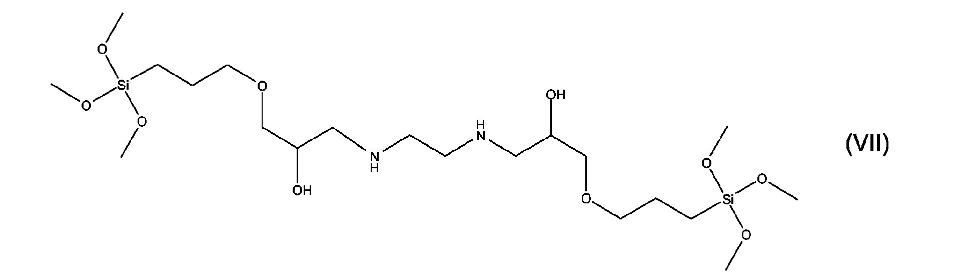

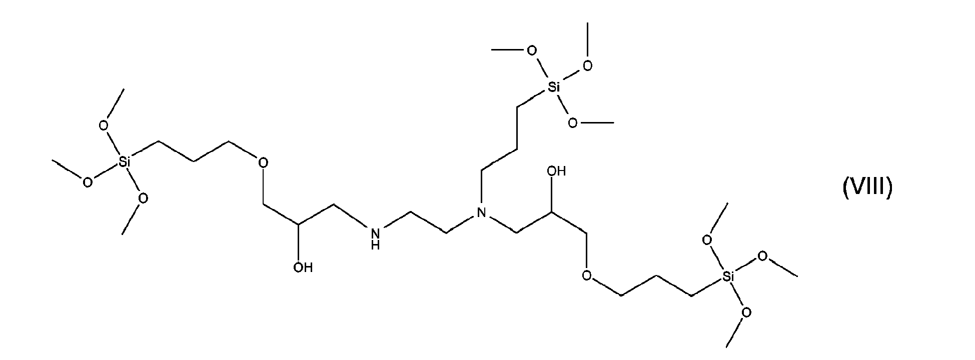

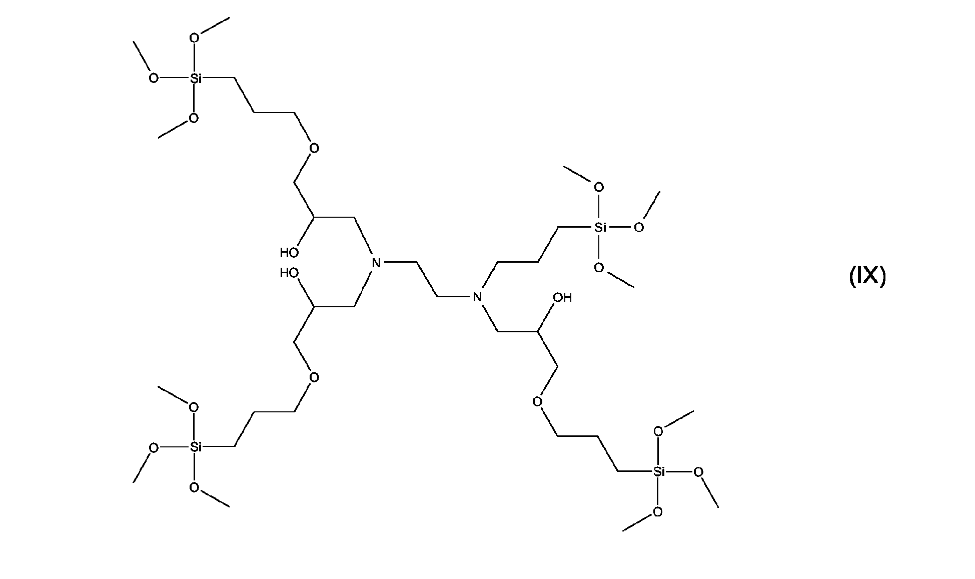

Die Verbindungen der Formeln (X) und (XI) werden aus der Reaktion von 3-Aminopropyl-trimethoxysilan und 3-Glycidyloxypropyl-trimethoxysilan erhalten.

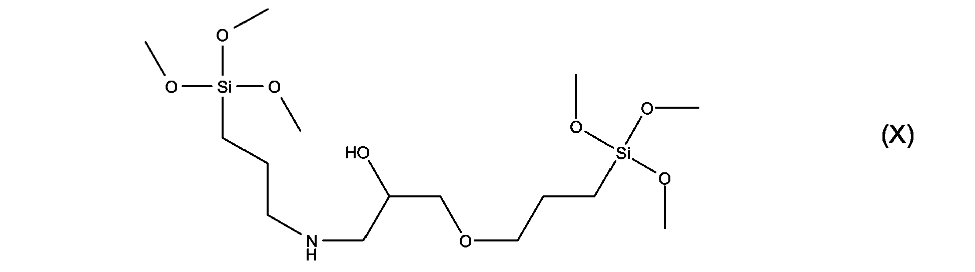

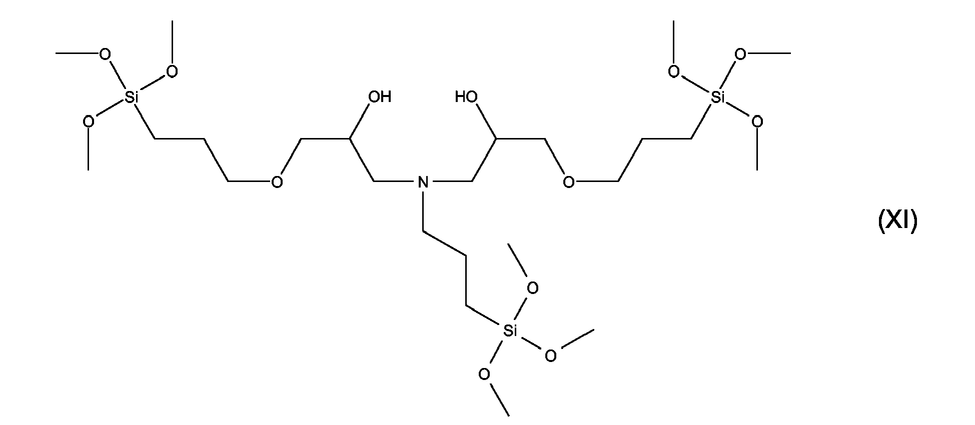

Die Verbindung der Formeln (XII) wird aus der Reaktion von Bis(trimethoxysilylpropyl)amin und 3-Glycidyloxypropyl-trimethoxysilan erhalten.

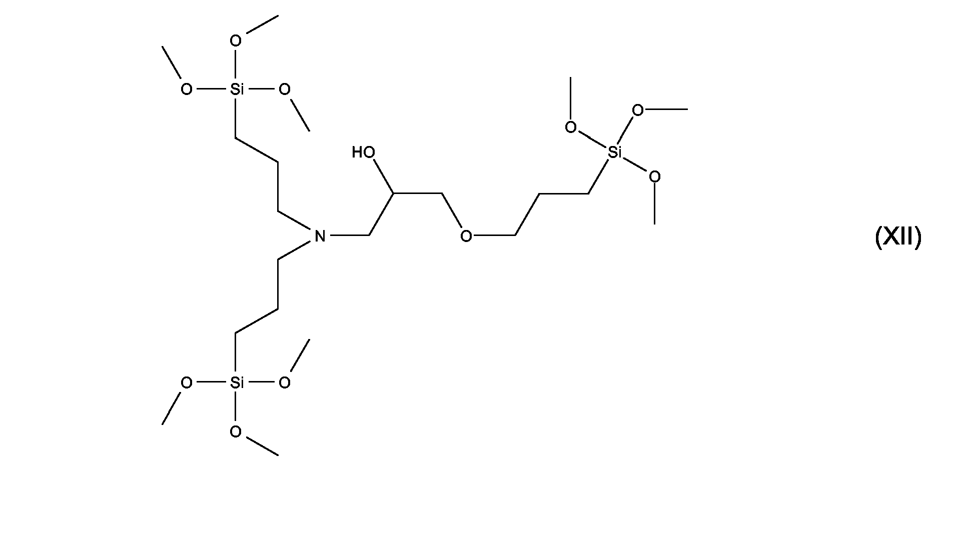

Beispiele für aminreaktiven Verbindungen (**ARV**) mit aktivierten Doppelbindungen sind beispielsweise α,β-ungesättigte Verbindungen, insbesondere Maleinsäurediester, Fumarsäurediester, Citraconsäurediester, Acrylsäureester, Methacrylsäureester, Zimtsäureester, Itaconsäurediester, Vinylphosphonsäurediester, Vinylsulfonsäurearylester, Vinylsulfone, Vinylnitrile, 1-Nitroethylene oder Knoevenagel-Kondensationsprodukte wie beispielsweise solche aus Malonsäurediestern und Aldehyden wie Formaldehyd, Acetaldehyd oder Benzaldehyd. Derartige aminreaktive Verbindungen bilden Michael-Addukte, bei denen das Amin an die Doppelbindung addiert. Beispiele derartiger Reaktionsprodukte sind Michael-Addukte von 3-Aminopropyl-trimethoxysilan, 3-Aminopropyl-dimethoxymethylsilan, 4-Amino-3,3-dimethylbutyl-trimethoxysilan, 4-Amino-3,3-dimethylbutyl-dimethoxymethylsilan, Aminomethyl-trimethoxysilan oder Aminomethyl-dimethoxymethylsilan an Maleinsäuredimethyl-, -diethyl- oder -dibutylester, Acrylsäuretetrahydrofurfuryl-, -isobornyl-, -hexyl-, -lauryl-, -stearyl-, 2-hydroxyethyl- oder 3-hydroxypropylester, Phosphonsäuredimethyl-, -diethyl- oder - dibutylester, Acrylnitril, 2-Pentennitril, Fumaronitril oder β-Nitrostyrol, sowie die Analoga der genannten Aminosilane mit Ethoxy- anstelle der Methoxygruppen am Silicium. Insbeondere ist das Michael-Addukt N-(3-Trimethoxysilyl-propyl)-amino-bernsteinsäurediethylester zu nennen.

Beispiele für aminreaktiven Verbindungen (**ARV**) mit Isocyantgruppen sind Isocyanatosilane oder Polyisocyanate. Als Isocyanatosilan sind insbesondere 3-Isocyanatopropyl-trimethoxysilan und 3-Isocyanatopropyltriethoxysilan zu nennen. Als Polyisocyanate sind beispielsweise 2,4- und 2,6-Toluylendüsocyanat (TDI) und beliebige Gemische dieser Isomeren, 4,4'-, 2,4'-und 2,2'-Diphenylmethandüsocyanat (MDI) und beliebige Gemische dieser und weiterer Isomeren, 1,3- und 1,4-Phenylendiisocyanat, 2,3,5,6-Tetramethyl-1,4-diisocyanatobenzol, 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Cyclohexan-1,3- und - 1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), m- und p-Xylylendüsocyanat (XDI), 1,3-und 1,4-Tetramethylxylylendüsocyanat (TMXDI), 1,3- und 1,4-Bis-(isocyanatomethyl)-cyclohexan, Oligomere der vorgenannten Polyisocyanate, sowie beliebige Mischungen der vorgenannten Polyisocyanate. Bevorzugt sind MDI, TDI, HDI und IPDI, sowie deren Biurete oder Isocyanurate.

Falls das Organoalkoxysilan **S** ein Epoxysilan ist, sind die Epoxysilane, wie sie oben als Aminreaktive Verbindungen (**ARV**) beschrieben worden sind vorzuziehen.

Beispielhaft als Mercaptosilan als Organoalkoxysilan **S** sind 3-mercaptopropyl-trimethoxysilan und 3-mercaptopropyl-triethoxysilan zu nennen.

Falls das Organoalkoxysilan **S** ein Alkylsilan ist, sind insbesondere die Silane mit C₁-C₆-Alkylresten zu nennen, wie beispielsweise Methyltrimethoxysilan, Ethyltrimethoxysilan und Butyltrimethoxysilan.

Als Tenside **T** können natürliche oder synthetische Stoffe verwendet werden, welche in Lösungen die Oberflächenspannung des Wassers oder anderer Flüssigkeiten herabsetzen. Als Tenside, auch Netzmittel genannt, können anionische, kationische, nichtionische oder ampholytische Tenside oder deren Mischungen verwendet werden.

Beispiele für anionische Tenside sind Carboxylat-, Sulfat-, Phosphat- oder Sulfonat-Gruppen aufweisende Tenside, wie zum Beispiel Aminsäurederivate, Fettalkoholethersulfate, Fettalkoholsulfate, Seifen, Alkylphenolethoxylate, Fettalkoholethoxylate, aber auch Alkansulfonate, Olefinsulfonate oder Alkylphosphate.

Zu den nichtionischen Tensiden, den sogenannten Niotensiden, gehören beispielsweise Ethoxylate, wie zum Beispiel ethoxylierte Additionsprodukte von Alkoholen, wie beispielsweise Polyoxyalkylenpolyole, Amine, Fettsäuren, Fettsäureamide, Alkylphenole, Ethanolamide, Fettamine, Polysiloxane oder Fettsäureester, aber auch Alkyl- oder Alkylphenylpolyglykolether, wie zum Beispiel Fettalkoholpolyglykolether, oder Fettsäureamide, Alkylglykoside, Zuckerester, Sorbitanester, Polysorbate oder Trialkylaminoxide, aber auch Ester und Amide aus Poly(meth)acrylsäuren mit Polyalkylenglykolen oder Aminopolyalkylenglykole, die allenfalls einseitig mit Alklygruppen abgeschlossen sein können.

Beispiele für kationische Tenside sind quaternäre Ammonium- oder Phosphoniumverbindungen, wie zum Beispiel Tetraalkylammoniumsalze, N-,N-dialkylimidazolinverbindungen, Dimethyldistearyl-ammoniumverbindungen, oder N-Alkylpyridinverbindungen, insbesondere Ammoniumchloride.

Zu den ampholytischen oder amphoterischen Tensiden gehören amphotere Elektrolyte, sogenannte Ampholyte, wie zum Beispiel Aminocarbonsäuren, und Betaine.

Derartige Tenside sind kommerziell breit erhältlich.

Besonders geeignet sind nichtionische Tenside, insbesondere alkoxylierte Alkohole. Insbesondere geeignet gezeigt haben sich alkoxylierte nichtionische Fluorotenside, insbesondere Zonyl® FSO-100, welches bei ABCR, Deutschland kommerziell erhältlich ist, alkoxylierte Alkohole oder alkoxylierte Alkylphenole, insbesondere Antarox FM 33, welches kommerziell bei Rhodia kommerziell erhältlich ist.

Das Tensid muss wasserfrei sein, da die Einbringung von wesentlichen Mengen an Wasser durch das Tensid zu vorzeitiger Hyrolyse der Silane und damit zu Lagerproblemen führen kann. Zum Verständnis des Terms "wasserfrei" wird auf die obige Definition verwiesen.

Weiterhin ist das Verhältnis von Organoalkoxysilan **S** zu Tensid **T** in einem bestimmten Verhältnis einzuhalten. Ist das Verhältnis **S:T** grösser als 5:1 wird die Empfindlichkeit gegenüber Wasser nicht wesentlich verbessert. Ist dieses Verhältnis kleiner als 1:2, insbesondere kleiner als 2:3, wird die Haftung zunehmend negativ beeinflusst, falls die Silanzusammensetzung als Haftvermittler eingesetzt wird.

Das optimale Verhältnis von Organoalkoxysilan **S** zu Tensid **T** beträgt, insbesondere für Aminosilane als Organoalkoxysilan **S**, einen Wert von 3:1 bis 2:3.

Die Organoalkoxysilanzusammensetzung kann weitere Bestandteile enthalten. Beispiele für derartige Zusätze sind Lösungsmittel, anorganische Füllstoffe, Katalysatoren und Stabilisatoren, Farbstoffe oder Pigmente.

Falls derartige weitere Bestandteile verwendet werden, ist einerseits darauf zu achten, dass die Zusammensetzung nicht mehr als 1 Gew.-%, insbesondere nicht mehr als 0.5 Gew.-% Wasser aufweist. Andererseits darf die Organoalkoxysilanzusammensetzung nicht weniger als 33 Gew.-% insbesondere nicht weniger als 40 Gew.-% an Organoalkoxysilan S aufweisen.

Bevorzugt sind die Organoalkoxysilanzusammensetzungen welche im Wesentlichen lediglich aus Organoalkoxysilan **S** und Tensid **T** bestehen. Unter "wesentlich" wird hierbei verstanden, dass die Gewichtssumme von Organoalkoxysilan **S** und Tensid **T** mehr als 90 Gew.-%, insbesondere mehr als 95%, bevorzugt mehr als 99 Gew.-%, bezogen auf das Gewicht der Organoalkoxysilanzusammensetzung, beträgt.

Da vor allem polare, insbesondere wasserlösliche, Organoalkoxysilane empfindlicher in der Lagerstabilität gegenüber Wasser sind, treten die durch die vorliegende Erfindung erreichbaren Verbesserungen vor allen bei polaren insbesondere wasserlöslichen, Organoalkoxysilanen **S** zu Tage. Dies ist der Grund, warum sehr apolare Organoalkoxysilane **S**, wie beispielsweise höhere Alkylalkoxysilane, wie Dodecyltrimethoxysilan oder Octadecyltrimethoxysilan, nicht als Organoalkoxysilane **S** bevorzugt werden. Die Verbesserung der Lagerstabilität gegenüber Wasser ist besonders deutlich bei Aminosilanen als Organoalkoxysilane **S**.

Die Organoalkoxysilanzusammensetzungen, insbesondere wenn sie Aminosilane als Organoalkoxysilane **S** enthalten, sind bedeutend weniger empfindlich gegenüber dem Einfluss von Wasser während der Lagerzeit. Dies zeigt sich insbesondere dann, wenn Wasser, insbesondere in der Form von Luftfeuchtigkeit, in Kontakt mit den Organoalkoxysilanzusammensetzungen gelangen kann. Gründe für einen derartigen Kontakt können beispielsweise durch undichte Verpackungen sein. So kann es in der Praxis durchaus vorkommen, dass beispielsweise Orginalverpackungen nicht dicht sind, oder dass ein Vorrats-Gebinde nach dem erstmaligen Öffnen schlecht oder undicht wieder verschlossen wird oder dass es eine gewisse Zeit völlig unverschlossen der Umwelt exponiert ist. Schliesslich wird die Lagerstabilität der Organoalkoxysilanzusammensetzungen im Vergleich zum Stand der Technik stark erhöht, falls diese in Gefässen aus Kunststoff gelagert werden. Dies ist besonders dann der Fall, wenn das Verhältnis von Oberfläche zu Volumen des Gebindes gross ist, d.h. bei kleinvolumigen Gebinden. Die für Kunststoffgebinde üblich verwendeten Kunststoffe, wie Polyethylen oder Polypropylen, weisen nämlich vielfach eine ungenügende Wasserdampfdiffusionsdichtigkeit auf. Silanzusammensetzungen gemäss dem Stand der Technik sind deshalb für kleine Volumina nicht in Kunststoffgebinden sondern in Glas oder Metallgebinden gelagert. Durch die Möglichkeit der Verwendung von Kunststoffgebinden für die Lagerung der erfindungsgemässen Organoalkoxysilanzusammensetzungen ergeben sich deshalb enorme Kosten- und Gewichtsvorteile sowie zusätzliche Freiheiten im Design und der Gestaltung der Packung.

Die verbesserte Lagerfähigkeit, beziehungsweise geringere Empfindlichkeit gegenüber Wasser während der Lagerzeit, zeigt sich insbesondere durch das Ausbleiben oder zumindest starkes Verzögern der Bildung von Ausfällungen oder Trübungen.

Die Organoalkoxysilanzusammensetzungen werden insbesondere als Haftvermittler eingesetzt. Diese Haftvermittler können Teil von Zusammensetzungen sein, welche gute Haftung aufweisen müssen. So sind Organoalkoxysilanzusammensetzungen als Bestandteil von Kleb- oder Dichtstoffen möglich. Ebenso können sie in Beschichtungen wie Lacke oder Bodenbeläge eingesetzt werden. In einer Ausführungsform können die Organoalkoxysilane **S** hierbei kovalent mit reaktiven Gruppen reagieren. So können beispielsweise Aminosilane der Formel (I) dazu verwendet werden, um mit Isocyanat-Gruppen aufweisenden Prepolymeren zu reagieren und sogenannte Silanterminerte Polyurethane (SPUR) herzustellen.

Weiterhin können die Organoalkoxysilanzusammensetzungen als Vorbehandlungsmittel oder ein Teil eines Vorbehandlungsmittels zur Verbesserung der Haftung eines darauf applizierten Kleb- oder Dichtstoffes eingesetzt werden. Derartige Vorbehandlungsmittel werden vielfach auch als Primer bezeichnet. Ein derartiger Primer kann ein- oder zweikomponentig sein.

Hierbei wird eine Organoalkoxysilanzusammensetzungen oder eine Zusammensetzung, welche die Organoalkoxysilanzusammensetzungen enthält auf ein zu verklebendes oder abzudichtendes oder zu beschichtendes Substrat aufgebracht. Nachdem die so genannte Ablüftezeit verstrichen ist, wird anschliessend ein Klebstoff, ein Dichtstoff oder eine Beschichtung appliziert. Es handelt sich hierbei insbesondere um reaktive, d.h. vernetzende Klebstoffe, Dichtstoffe oder Beschichtungen, insbesondere auf Basis von Isocyanatgruppen-enhaltende Polyurethanen.

Als zweikomponentige Primer sind insbesondere wässrige zweikomponentige Primer, bestehend aus einer Komponente **K1** und einer Komponente **K2**, bevorzugt. In einer Ausführungsform der Erfindung enthält die erste Komponente **K1** eine Organoalkoxysilanzusammensetzung und die zweite Komponente **K2** Wasser und eine Säure. Es ist bevorzugt, dass nach der Mischung der Komponente **K1** und **K2** ein pH von 2 - 5, insbesondere 3.5 - 4.5, resultiert. Eine derartige Primerzusammensetzung kann durch einfaches Schütteln gut vermischt werden und hydrolysiert schnell, während die Kondensation und damit die Bildung von unerwünschten Siloxanen verlangsamt wird. Dadurch wird eine sehr gute Haftung aufgebaut, ohne dass sich zwischen dem Mischen und dem Applizieren des wässrigen Primers unerwünschte Niederschläge oder Trübungen bilden.

### Beispiele

**Tabelle1 Verwendete Organoalkoxysilan.**

| Abkürzung | Organoalkoxysilan |
|---|---|
| A1110 | 3-Aminopropyl-trimethoxysilan |
| A1120 | N-(2-Aminoethyl)-3-aminopropyl-trimethoxysilan |
| A1130 | 3-[2-(2-Aminoethylamino)-ethylamino]-propyl-trimethoxysilan |
| A1170 | Bis(trimethoxysilylpropyl)amin |
| A187 | 3-Glycidyloxypropyl-trimethoxysilan |
| MTMS | Methyltrimethoxysilan |

Des weiteren wurde das Reaktionsprodukt **RP1** hergestellt aus 3-Glycidyloxypropyl-trimethoxysilan und N-(2-Aminoethyl)-3-aminopropyl-trimethoxysilan, indem 1 Mol A1120 mit 3 Mol A187 gemischt wurden. Unmittelbar nach dem Mischen konnte der Umsatz mit IR überprüft werden. Die für die Epoxy-Gruppe charakteristische Bande bei ca. 910 cm⁻¹ ist zwar unmittelbar nach dem Mischen noch nachweisbar, verschwindet aber schnell.

**Tabelle2 Verwendete Tenside.**

| Abkürzung | Tensid | Lieferant |
|---|---|---|
| "Surfynol" | Surfynol® 61 | Air Products |
| "Soprophor" | Soprophor BSU | Rhodia, Deutschland |
| "FM33" | Antarox FM33 | Rhodia, Deutschland |
| "AE 01" | EnviroGem® AE 01 | Air Products |
| "AE 02" | EnviroGem®AE 02 | Air Products |
| "Hydropalat 120" | Hydropalat® 120 | Cognis, Deutschland |

In Tabelle 3 wurde das Verhältnis von Organoalkoxysilan zu Tensid variiert. Als Organoalkoxysilan wurde das Reaktionsprodukt **RP1** verwendet und mit unterschiedlichen Tensiden kombiniert.

In der ersten Referenzserie ***Ref.S1*** wurde kein Tensid, d.h. reines Organoalkoxysilan, verwendet. In der zweiten, resp. dritten Referenzserie ***Ref.S2*** resp. ***Ref.S3*** betrug das Verhältnis 20:1 resp. 10:1.

Das jeweilige Tensid wurde zu 2.5 g des Reaktionsproduktes **RP1** in Glassgefäss (Durchmesser 12 mm, 4 cm hoch, Vol. ca. 4.5 ml, mit Kunststoff-Schraubdeckel), welches vorgängig in einem Ofen bei 200°C während einem Tag getrocknet und bei 25°C/50% rel. Luftfeuchtigkeit auf Raumtemperatur abgekühlt wurde, zugegeben. Anschliessend wurden die so gefüllten Gefässe mit Deckel verschlossen und in einem Ofen (Ehret, TK/L 4061) mit Umluft bei 50°C gelagert. Während 30 Tagen wurden täglich die Proben visuell beurteilt. In Tabelle 3 ist die Stabilität angegeben und zwar durch Angabe der Anzahl Tage, bis festgestellt wurde, dass die Probe gelierte. Wenn nach dem 30. Tag die Probe immer noch einwandfrei war, wurde der Wert >30 angegeben.

**Tabelle 3. Stabilität (Anzahl Tage bis geliert) von Organoalkoxysilan-Tensid Mischungen bei 50°C im geschlossenen Gefäss.**

| | **RP1**:Tensid [g:g] | | | | | | |
|---|---|---|---|---|---|---|---|
| Tensid | 1:0 | 20:1 | 10:1 | 5:1 | 2:1 | 1:1 | 1:2 |
| | ***Ref.S1*** | ***Ref.S2*** | ***Ref.S3*** | ***BS1*** | ***BS2*** | ***BS3*** | ***BS4*** |
| Surfynol | 1 | 1 | 1 | 2 | >30 | >30 | >30 |
| Soprophor | 1 | 1 | 1 | 1 | >10 | >30 | >30 |
| AE 01 | 1 | 1 | 3 | 3 | 10 | >30 | >30 |
| Hydropalat 120 | 1 | 1 | 1 | 2 | >30 | >30 | >30 |
| Anteil **S** an Zusammensetzung [Gew.-%] | 100 | 95 | 91 | 83 | 66 | 50 | 33 |

In Tabelle 4 wurden unterschiedliche Silane und unterschiedliche Tenside in einem Mischverhältnis **S:T** von 2.125:1, entsprechend einem Anteil des Organoalkoxysilan **S** von 68 Gew.% an dem Gesamtgewicht der gesamten Zusammensetzung, wie vorher beschrieben gemischt. In dieser Versuchsreihe wurde jedoch mittels Bohrer ein Loch von 1 mm in den Deckel gebohrt, um eine undichte Verpackung zu simulieren. Die Lagerung und Bestimmung der Stabilität erfolgt wie für die Versuche der Tabelle 3. Die Vergleichsversuchserie ***Ref.S4*** erfolgte ohne Zugabe von Tensiden, d.h. als reine Organoalkoxysilane.

**Tabelle 4. Stabilität (Anzahl Tage bis geliert) von Organoalkoxysilan-Tensid Mischungen bei 50°C im Gefäss mit Loch im Deckel.**

| | ***BS5*** | ***BS6*** | ***BS7*** | ***Ref.S4*** |
|---|---|---|---|---|
| | Surfynol | AE 01 | Hydropalat 120 | - |
| A1130 | 7 | 1 | 6 | 1 |
| A1170 | 1 | 4 | 1 | 1 |
| MTMS | >30 | >30 | 10 | 1 |

In einer weiteren Versuchsserie wurden die Lagerstabilitäten von Reaktionsprodukten aus Aminosilanen und Epoxysilanen enthaltenen Zusammensetzungen mit unterschiedlichen Tensiden verglichen.

Es wurden hierbei das bereits beschriebene Reaktionsprodukt **RP1** verwendet. Weiterhin wurde ein Reaktionsprodukt **RP2** aus 3-Glycidyloxypropyltrimethoxysilan und 3-[2-(2-Aminoethylamino)-ethylamino]-propyl-trimethoxysilan hergestellt, indem 1 Mol A1130 mit 6.6 Mol A187 gemischt wurden.

In Tabelle 5 wurden **RP1** bzw. **RP2** mit unterschiedlichen Tensiden in einem Mischverhältnis **S:T** von 2.125:1, entsprechend einem Anteil des Organoalkoxysilan **S** von 68 Gew.-% an dem Gesamtgewicht der gesamten Zusammensetzung, wie vorher beschrieben gemischt. In dieser Versuchsreihe wurde das Gefäss mit verschlossenem Deckel (ohne Loch wie für Tabelle 4) bei 50°C, wie bereits beschrieben im Ofen, oder bei 23°C/50% rel. Luftfeuchtigkeit gelagert. Die Bestimmung der Stabilität erfolgt wie für die Versuche der Tabelle 3. Die Vergleichsversuchserie ***Ref.S5*** erfolgte ohne Zugabe von Tensiden, d.h. als reine Organoalkoxysilane.

**Tabelle 5. Stabilität (Anzahl Tage bis geliert) von Organoalkoxysilan-Tensid Mischungen bei 50°C und 23°C im verschlossenen Gefäss.**

| | | **RP1** | | **RP2** | |
|---|---|---|---|---|---|
| | Tensid | 23°C | 50°C | 23°C | 50°C |
| ***BS8*** | Surfynol | >90 | >90 | >90 | >90 |
| ***BS9*** | Soprophor | 84 | >90 | 84 | >90 |
| ***BS10*** | FM33 | 25 | >90 | 74 | 74 |
| ***BS11*** | AE 01 | >90 | 29 | >90 | 1 |
| ***BS12*** | AE 02 | >90 | 1 | >90 | >90 |
| ***BS13*** | Hydropalat 120 | >40 | >40 | >40 | >40 |
| ***Ref.S5*** | Ohne Tensid | 9 | 1 | 32 | 8 |

### Herstellung von wässrigen Primern

Es wurden Organoalkoxysilanzusammensetzungen aus A1110 und unterschiedlichen Tensiden in den in Tabelle 6 angegebenen Verhältnissen hergestellt und als eine erste Komponente **K1** eines wässrigen Primers verwendet. Die zweite Komponente **K2** bestand aus Wasser und 1 Gew.-% Essigsäure. 1.05 g der Komponente **K1** wurde in 49 g der Komponente **K2** gegeben und geschüttelt.

Diese Mischung wurden anschliessend mit einem mittels eines damit getränkten Zellulosetuchs (Tela®, Tela-Kimberly Switzerland GmbH) auf den Keramikrand einer VSG Frontscheibe eines Mitsubishi Space Wagon von Splintex aufgetragen. Nach 10 Minuten Ablüftezeit wurde der einkomponentige feuchtigkeitshärtende Polyurethanklebstoff Sikaflex®-250 DM-2 oder Sikaflex®-250 HMV-2+, welche beide Polyurethanprepolymere mit Isocyanatgruppen enthalten und bei Sika Schweiz AG kommerziell erhältlich sind, als Rundraupe mit einer Kartuschenpresse und einer Düse aufgetragen und während 4 Tagen bei 23°C und 50% rel. Luftfeuchtigkeit ausgehärtet.

### Haftungstest ("Raupentest")

Die Haftung des Klebstoffes wurde mittels 'Raupentest' getestet. Hierbei wird am Ende knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie Plazieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebstoff (Kohäsionsbruch). Die Bewertung der Hafteigenschaften erfolgt durch Abschätzen des kohäsiven Anteils der Haftfläche:
1 = > 95 % Kohäsionsbruch
2 = 75 - 95 % Kohäsionsbruch
3 = 25 - 75 % Kohäsionsbruch
4 = < 25 % Kohäsionsbruch
5 = 0% Kohäsionsbruch (rein adhäsiver Bruch)
   Testresultate mit Bewertung von 4 oder 5 gelten als ungenügend.

Die Haftungsresultate sind in Tabellen 6 und 7 angegeben.

**Tabelle 6. Wässrige Primer mit Silan/Tensid-Mischung in Komponente K1. Haftung von Sikaflex® 250 DM-2**

| | Sikaflex® 250 DM-2 | | | | |
|---|---|---|---|---|---|
| | **A1110**:Tensid [g:g] | | | | |
| Tensid | 1:0 | 2:1 | 1:1 | 1:2 | 1:10 |
| | ***Ref.S6*** | ***BS14*** | ***BS15*** | ***BS16*** | ***Ref.S7*** |
| Surfynol | 2 | 1 | 2 | 3 | 3 |
| Soprophor | 2 | 1 | 2 | 2 | 3 |
| Hydropalat 120 | 2 | 1 | 2 | 2 | 3 |
| Anteil **S** an Komp. **K1** [Gew.-%] | 100 | 66 | 50 | 33 | 9 |

**Tabelle 7. Wässrige Primer mit Silan/Tensid-Mischung in Komponente K1. Haftung von Sikaflex® 250 HMV-2+**

| | Sikaflex® 250 HMV-2+ | | | | |
|---|---|---|---|---|---|
| | **A1110**:Tensid [g:g] | | | | |
| Tensid | 1:0 | 2:1 | 1:1 | 1:2 | 1:10 |
| | ***Ref.S8*** | ***BS17*** | ***BS18*** | ***BS19*** | ***Ref.S9*** |
| Surfynol | 4 | 4 | 4 | 3 | 5 |
| Soprophor | 4 | 1 | 2 | 4 | 4 |
| Hydropalat 120 | 4 | 3 | 3 | 4 | 4 |
| Anteil **S** an Komp. **K1** [Gew.-%] | 100 | 66 | 50 | 33 | 9 |

## Patentansprüche

1. Organoalkoxysilanzusammensetzung umfassend
mindestens ein Organoalkoxysilan **S**
sowie mindestens ein wasserfreies Tensid **T**;
wobei der Gewichtsanteil der Summe aller Organoalkoxysilans **S** ≥ 33 Gew.-%, bezogen auf das Gewicht der Organoalkoxysilanzusammensetzung beträgt
und wobei das Verhältnis der Gewichtsumme aller Organoalkoxysilane **S** zur der Gewichtsumme aller wasserfreien Tensid **T** (**S:T**) einen Wert von 5:1 bis 1:2 aufweist.

2. Organoalkoxysilanzusammensetzung gemäss Anspruch 1, **dadurch gekennzeichnet, dass** das Tensid **T** ein nichtionisches Tensid ist.

3. Organoalkoxysilanzusammensetzung gemäss Anspruch 1 oder 2, **dadurch gekennzeichnet, dass** das Gewichtsverhältnis Organoalkoxysilans **S** zu wasserfreien Tensid **T** (**S:T**) einen Wert von 3:1 bis 2:3 aufweist.

4. Organoalkoxysilanzusammensetzung gemäss einem der vorhergehenden Ansprüche, **dadurch gekennzeichnet, dass** der Gewichtsanteil der Summe aller Organoalkoxysilans **S** ≥ 40 Gew.-%, bezogen auf das Gewicht der Organoalkoxysilanzusammensetzung beträgt.

5. Organoalkoxysilanzusammensetzung gemäss einem der vorhergehenden Ansprüche, **dadurch gekennzeichnet, dass** das Organoalkoxysilan **S** ein Aminosilan ist.

6. Organoalkoxysilanzusammensetzung gemäss einem der vorhergehenden Ansprüche, **dadurch gekennzeichnet, dass** das Aminosilan die Formel (I) aufweist 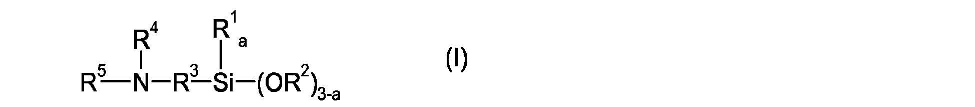 wobei R¹ für eine Alkylgruppe mit 1 bis 8 C-Atomen, bevorzugt für eine Methyl- oder für eine Ethylgruppe, insbesondere eine Methylgruppe, steht;
R² für eine Alkylgruppe mit 1 bis 5 C-Atomen, bevorzugt für eine Methylgruppe oder für eine Ethylgruppe oder für eine Isopropylgruppe, insbesondere für eine Methylgruppe oder für eine Ethylgruppe, steht,
R³ für eine lineare oder verzweigte Alkylengruppe mit 1 bis 4 C-Atomen, insbesondere für Propylen, steht,
R⁴ für H oder eine lineare oder verzweigte Alkylengruppe mit 1 bis 10 C-Atomen oder für einen Substituent der Formel (II) 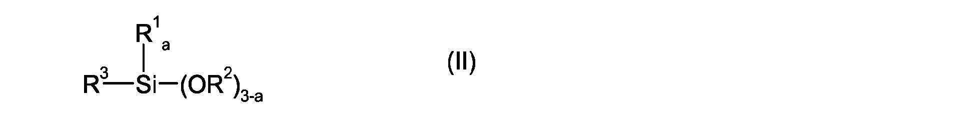 steht,
R⁵ für H oder eine lineare oder verzweigte Alkylengruppe mit 1 bis 10 C-Atomen oder für eine lineare oder verzweigte Alkylengruppe mit 1 bis 10 C-Atomen mit weiteren Heteroatomen oder für einen Substituent der Formel (II) 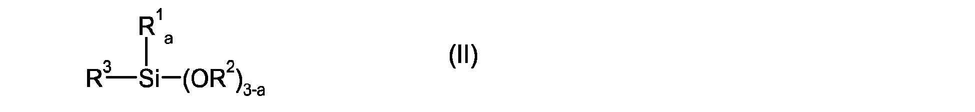 steht
und wobei a für 0, 1 oder 2, insbesondere für 0 oder 1, bevorzugt für 0 steht.

7. Organoalkoxysilanzusammensetzung gemäss Anspruch 6, **dadurch gekennzeichnet, dass** R⁵ für CH₂CH₂NH₂ steht.

8. Organoalkoxysilanzusammensetzung gemäss Anspruch 6, **dadurch gekennzeichnet, dass** das Aminosilan ausgewählt ist aus der Gruppe umfassend Aminosilane der Formel (III), (IV) und (V)

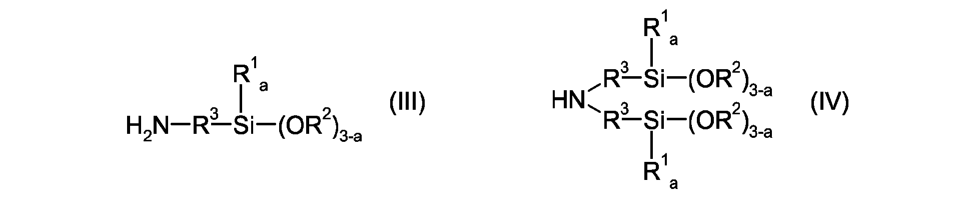

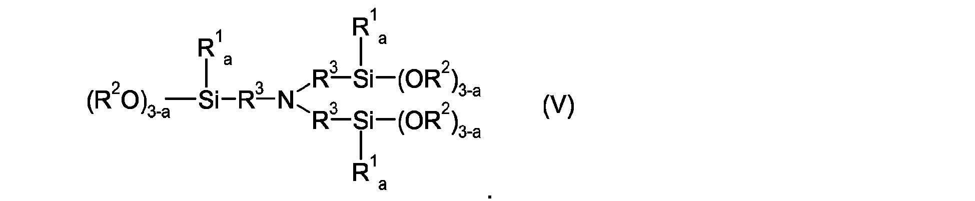

9. Organoalkoxysilanzusammensetzung gemäss Anspruch 5, **dadurch gekennzeichnet, dass** das Aminosilan ein Reaktionsprodukt eines Aminosilans der Formel (I), wie es in Anspruch 6 oder 7 oder 8 beschrieben ist, und welches mindestens eine sekundäre oder primäre Aminogruppe aufweist,
mit einer Verbindung (**ARV**) welche mindestens eine funktionelle Gruppe enthält, welche mit einer primären oder sekundären Aminogruppe reagieren kann.

10. Organoalkoxysilanzusammensetzung gemäss Anspruch 9, **dadurch gekennzeichnet, dass** die funktionellen Gruppe, welche mit einer primären oder sekundären Aminogruppe reagieren kann, eine Epoxygruppe ist.

11. Organoalkoxysilanzusammensetzung gemäss Anspruch 5, **dadurch gekennzeichnet, dass** das Aminosilan ein Reaktionsprodukt eines Aminosilans der Formel (III) oder (IV), wie sie in Anspruch 8 beschrieben sind, mit einer Epoxygruppen enthaltenden Verbindung ist.

12. Organoalkoxysilanzusammensetzung gemäss Anspruch 10 oder 11, **dadurch gekennzeichnet, dass** die Epoxygruppen enthaltende Verbindung ein Epoxysilan, insbesondere ein Epoxysilan der Formel (VI), ist 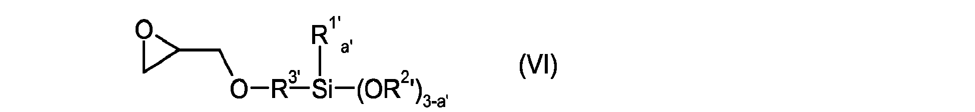 wobei R^{1'} für eine Alkylgruppe mit 1 bis 8 C-Atomen, bevorzugt für eine Methyl- oder für eine Ethylgruppe, insbesondere eine Methylgruppe, steht;
R^{2'} für eine Alkylgruppe mit 1 bis 5 C-Atomen, bevorzugt für eine Methylgruppe oder für eine Ethylgruppe oder für eine Isopropylgruppe, insbesondere für eine Methylgruppe oder für eine Ethylgruppe, steht,
R^{3'} für eine lineare oder verzweigte Alkylengruppe mit 1 bis 4 C-Atomen, insbesondere für Propylen, steht,
und wobei a' für 0, 1 oder 2, insbesondere für 0 oder 1, bevorzugt für 0 steht.

13. Organoalkoxysilanzusammensetzung gemäss einem der Ansprüche 6 bis 12, **dadurch gekennzeichnet, dass** a = 0 und R² für Methyl und R³ für Propylen steht.

14. Verwendung der Organoalkoxysilanzusammensetzung gemäss einem der Ansprüche 1 bis 13 als Haftvermittler.

15. Verwendung der Organoalkoxysilanzusammensetzung gemäss einem der Ansprüche 1 bis 13 als Vorbehandlungsmittel von zu verklebenden oder abzudichtenden Substratoberflächen zur Verbesserung der Haftung eines darauf applizierten Klebstoff oder Dichtstoff.

16. Verwendung der Organoalkoxysilanzusammensetzung gemäss einem der Ansprüche 1 bis 13 zur Herstellung eines wässrigen Vorbehandlungsmittels zur Verbesserung der Haftung von Klebstoffen.
